Europäisches Patentamt

(19) European Patent Office

Office européen des brevets

(11) Publication number: **0 100 791**
**B1**

(12) EUROPEAN PATENT SPECIFICATION

(45) Date of publication of patent specification: 02.09.87

(51) Int. Cl.⁴: **G 01 N 27/34**

(21) Application number: 82110623.4

(22) Date of filing: 18.11.82

(54) **A novel dropping mercury electrode capable of automatic control.**

(30) Priority: 09.08.82 IT 2278582

(43) Date of publication of application:
22.02.84 Bulletin 84/08

(45) Publication of the grant of the patent:
02.09.87 Bulletin 87/36

(84) Designated Contracting States:
AT BE CH DE FR GB IT LI LU NL SE

(56) References cited:
GB-A-2 013 346

JOURNAL OF ELECTROANALYTICAL
CHEMISTRY, vol. 130, 1981, R.DIAS et al.:"The
pulsed-flow mercury electrode (PFME) - an
integrated dual DME and HME", pages 345-349

(73) Proprietor: **CONSIGLIO NAZIONALE DELLE
RICERCHE
Piazzale Aldo Moro, 7
I-00198 Roma (IT)**

(72) Inventor: **Guidelli, Rolando, Prof. Ist. di Chimica
Analitica
Via Gino Capponi, 9 Università di Firenze
I-50121 Firenze (IT)**
Inventor: **Foresti, Maria Luisa
Piazzale Aldo Moro, 7
Rome (IT)**

(74) Representative: **Bianchetti, Giuseppe
Studio Consulenza Brevettuale Via Rossini, 8
I-20122 Milan (IT)**

## Description

The present invention relates to mercury electrodes, and more specifically to dropping mercury electrodes.

Dropping mercury electrodes have provided substantial progress in the field of polarographic analytical methods. For instance, the inverse voltammetry which has been made possible by means of this type of electrode, today is one of the most sensitive methods for a variety of analytical applications.

In the early dropping mercury electrodes, the drop was allowed to grow manually up to the desired dimensions by letting the mercury leave its reservoir by means of a thin holding piston, the latter being allowed to advance by means of a micrometric screw (Metrohm E 410).

Subsequent models of dropping mercury electrodes which are presently in the marked are characterized by the extrusion of mercury by means of holding piston, but the growth and the separation of the drop have been automated (PAR 303SMDE, Metrohm EA 290).

The only stationary electrode, as far as it is known, which does not make use of pistons or any other mechanical device for the purpose of blocking the flow of mercury is described by Dias R. et al. (J. Electroanal. Chem., 130, 345—349, 1981). Here, the flow is caused by a mercury column which exerts a pressure superior to the atmospheric pressure and is blocked by application of pressure which is accurately determined and which is inferior to the atmospheric pressure. The regulation of the lowering of pressure is carried out by means of a barometer having a U shape provided with a movable electrical contact which controls the opening of an electric valve. This type of barometric sensor requires particular care in the cleaning of the apparatus because it is subject to the phenomena of seizures. Further, the adjustment of the pressure requires an accurate calibration which is carried out on the basis of tensiometric curves while keeping track of the residual counter pressure of the drop.

An object of the present invention is to provide an electrode which is simpler in construction and in function because the blocking of the drop is achieved simply by placing the reservoir in contact with the external environment without requiring any depression.

The electrode according to the present invention as set out in claim 1 consists of a capillary tube of inverted U shape and of sufficiently small internal diameter so as not to permit the flow of mercury, except that mercury may flow under the action of a difference in pressure of several centimeters of mercury between the two extremities of the capillary. The growth of the drop at one extremity of the capillary tube and the blocking of the drop occur as a result of the application and subsequent elimination of a pressure of several atmospheres, i.e. several bars, at the other extremity of the capillary by means of a system of electrovalves which are automatically controlled.

The pressure, which ordinarily is between 3 and 12 atmospheres, i.e. between about 3.039 and 12.156 bar, is applied to the reservoir of mercury by means of a nitrogen cylinder or compressed air or any other inert gas provided with a conventional device for reducing the pressure.

The invention will now be described in more detail by reference to the accompanying drawings of which:

Fig. 1 and 1a illustrate the electrode according to the present invention in cross-section; and

Fig. 2 illustrates the two electrovalves A and B being used for the application of pressure.

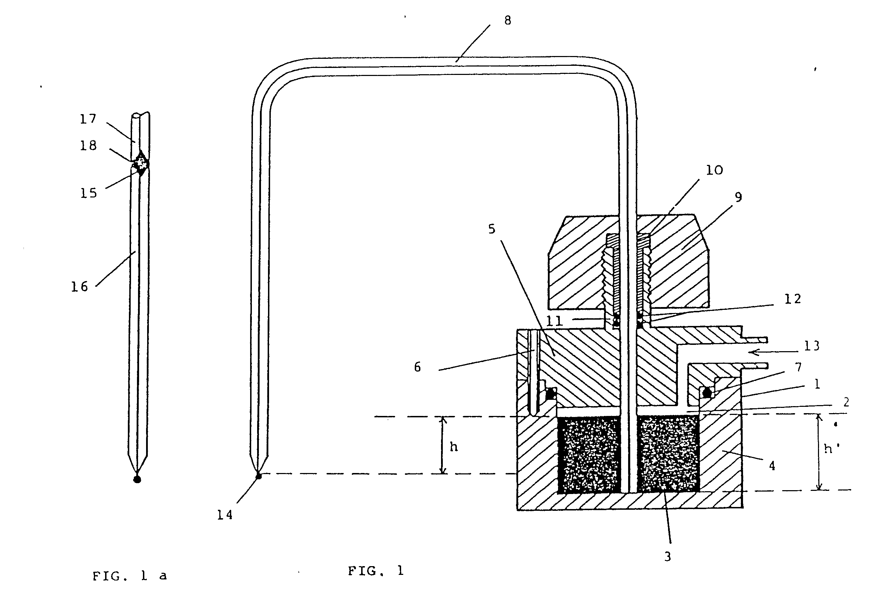

By reference of Fig. 1, the reservoir 1 has a cylindrical shape and may be made of plexiglas in the case of a pressure lower than 6 to 7 atmospheres i.e. about 6.078 to 7.091 bar, or of steel in the case of a higher pressure. The capillary tube 8 in the shape of an inverted U is firmly fixed to the reservoir by means of O-rings 6 and a threaded nut 10. The capillary tube has an internal diameter between $0.35 \cdot 10^{-2}$ cm and $0.5 \cdot 10^{-2}$ cm and has a length not less than 40 cm. The extremity of the capillary which is outside of the reservoir must be kept at a level less than 1—1.5 cm with respect to the level of mercury in the same reservoir, as shown by the height h in Fig. 1. In this manner, the counter pressure which acts on the drop 14 tending to push the drop in the interior of the capillary and which acquires values in the order of 1—1.5 cm of mercury, is almost completely balanced by the difference in the mercury level which acts in the opposite direction. The small residual difference in pressure is negligible under these conditions because of the opposite resistance exerted by the force of viscous attrition. The inlet for the gas is designated by numeral 13.

After these conditions have been achieved, it is noted that application only of atmospheric pressure on the reservoir causes no flow of mercury through the capillary and the area of the drop which eventually is performed at the free extremity of the capillary remains constant with time.

A convenient method of fixing the difference in the level represented by the symbol to the desired value of 1—1.5 cm consists of causing the extremity of the capillary, which extremity is dipped in the reservoir to touch the bottom of the reservoir and at the same time filling the reservoir of mercury up to a predetermined level h', as shown in Fig. 1, after having cut the U-shaped capillary in such a manner so that the difference in the level between the external extremity and the mercury level in the reservoir is equal to h. In order to avoid any obstruction to the extremity of the capillary which is dipped in the reservoir by the bottom of the reservoir, it is sufficient to cut this extremity along a plane which is slightly oblique with respect to the axis of the capillary. Even when the reservoir is made of steel, the level h' of the mercury in the reservoir may be controlled during use by means of a suitable opening of plexiglas onto the high portion of the lateral wall of the reservoir, a feature which is not shown in Fig. 1.

The difference in level h decreases slowly during operation and the subsequent emptying of the reservoir, but in view of the high internal diameter (4 cm), it is reduced to a value greater than 0.5 cm with respect to the original value so that it becomes consequently critical only after one day of uninterrupted operation. The orginal level of the mercury, therefore, may be easily readjusted when operation is started again on the following day.

As shown in Fig. 1, the U-shaped capillary may consist totally of a capillary tube of an internal diameter between $0.35 \cdot 10^{-2}$ and $0.5 \cdot 10^{-2}$ cm, in which case the maximum diameter which the suspended drop may reach is about 1.3 mm. If it is desired to increase this maximum diameter up to about 1.7 mm, it is possible to use (see Fig. 1a) a U-shaped capillary built by soldering to the capillary tube of an internal diameter 17 between $0.35 \cdot 10^{-2}$ and $0.5 \cdot 10^{-2}$ cm, a segment of capillary tube 8 of internal diameter 16 equal to 0.02 cm.

With this type of composite capillary which is schematically represented in Fig. 1a, it is also possible to reduce the electrical resistance of the electrode by carrying out the electrical connection by means of a platinum wire 18 directly soldered to the point of connection between the two types of capillary tube.

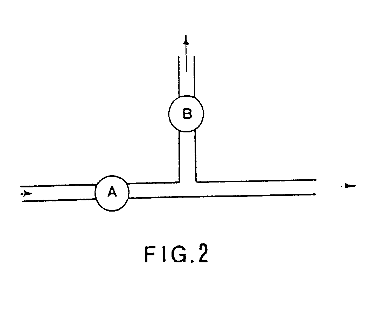

The pressure which is utilized for the growth of the drop which pressure remains constant in an excellent manner, if the handle of the pressure reducer of the cylinder remains in a fixed position, is applied to the mercury reservoir by means of two electrovalves A and B, as shown schematically in Fig. 2. The two electrovalves may be actuated by a conventional timer. After the electrovalves A is opened, which electrovalve is connected to the pressure generator and after valve B is simultaneously closed, which valve B is connected with the environment, the volume of the drop increases proportionately to time because of the constant flow of mercury through the capillary.

In order to block the volume of the drop, it is sufficient to reverse conditions of the two electrovalves, that is to close electrovalve A and simultaneously open electrovalve B. In this manner, therefore, the pressure on the mercury reservoir falls abruptly to the atmospheric value and the flow of mercury through the capillary is stopped. Under these conditions, the drop behaves as a stationary mercury electrode, so called "dropping electrode", and as such may be utilized for several electro-analytical applications. In order to form a new drop, it is sufficient to separate the first drop from the extremity of the capillary by slightly touching the extremity of the capillary with a small hammer, which is not shown in the figure and which is actuated by the timer and repeat the previously-described cycle. In this manner by again opening the electrovalve A and simultaneously closing electrovalve B, a new drop is formed which is blocked by inverting the conditions of the two electrovalves.

The dimensions of the drop of mercury may be varied by adjusting the pressure of the gas on the mercury reservoir with the manometer of the cylinder or by adjusting the period of time t of the growth of the drop by means of the timer prior to blocking the drop or by adjusting both these two variables. In fact, the weight of the drop after blockage is determined by f.t, in which f is the mercury flow in grams per second and which is essentially proportional to the pressure applied on the reservoir and t is the period of growth of the drop. Naturally, the drop may be brought more rapidly to the final desired volume by increasing the pressure on the reservoir and reducing the period of growth t.

The reproducibility of the area of the drop of the electrode in accordance with the present invention has been verified by measurements of the capacity of the current carried out a predetermined period of time after the blocking of each single drop, on a series of 100 successive drops. This reproducibility results to be not inferior to 0.05%. This reproducibility is notable and is made possible by the elimination of every manual intervention.

The constancy of the area of each single drop in time, during the entire period of blockage in which the reservoir of mercury is kept in contact with the external environment, has been verified by measurements of faradic current at regular time intervals. In this manner, it has been possible to determine that during blockage of a single drop for 10 minutes, the area varies by an amount less than 1%. These variations which are relatively small are to a great extent reproducible in passing from one drop to the next one.

The step of filling the reservoir with mercury is easily carried out by removing the cover 9 which is fixed to the lateral surface of the reservoir by means of screws 10 or much more simply by removing the U-shaped capillary and pouring the mercury through the opening. Obviously in accordance with the latter procedure, the control of the mercury level in the reservoir may be achieved only if the reservoir is made of plexiglas or if it is made of steel with an opening of plexiglas. The step of filling the U-shaped capillary when the capillary consists exclusively of a capillary tube of an internal diameter between $0.35 \cdot 10^{-2}$ and $0.5 \cdot 10^{-2}$ cm, is achieved without any particular precaution by fixing the empty capillary to the reservoir and applying pressure greater than the atmospheric pressure with the appropriate pressure generator. In the case of a U-shaped capillary obtained by soldering capillary tubes of different cross-section as shown in Fig. 1a, the filling step must be carried out with greater care, preferably using a vacuum pump. With both types of capillaries, however, the step of filling is carried out *una tantum*, independently from the step of filling the reservoir because the U-shaped capillary, once it has been filled, remains filled even after removal from the reservoir and exposing both extremities to the air.

The main advantages of the electrode according to the present invention with respect to commercial known electrodes, consists of the simplicity of construction and the ease of use and filling. In fact, the electrode according to the present invention does not require delicate mechanical devices, such as holding pistons or valves, in order to achieve the blockage of the mercury flow, in contrast with other electrodes which are known in the market. As a result, the electrode according to the present invention does not present the disadvantages of these devices, such as the gradual change of conditions as a result of wear and the difficulty of filling with mercury, which difficulty is due to the formation of pockets of air in proximity of protrusions such as pistons or valves.

The method according to the present invention may be directly controlled by a microprocessor by means of only two digital exits, with one connected to the electrovalves and the other to the small hammer.

**Claims**

1. A dropping mercury electrode which operates by rapidly generating static mercury drops of reproducible size and by holding them for an indefinitely long time at one end of a capillary tube (8) of inverted U-shape, which end is subject to atmospheric pressure, the other end of the capillary tube being connected to a mercury reservoir (1), in which electrode the level of the capillary end holding the mercury drop (14) is set lower than the upper level of the mercury (h') in the reservoir, the difference (h) between the two levels being about 1 to 1.5 cm, so as to roughly counterbalance the back-pressure acting on the drop; the inverted U-shaped capillary tube (8) is of a sufficient length and of a sufficiently small inner diameter such that, in conjunction with said level difference (h), viscous forces prevent the mercury (3) from flowing through the inverted U-shaped capillary tube (8) when the mercury reservoir (1) is subject to atmospheric pressure; and the reservoir is provided with means (13, A, B) for the inlet and the outlet of an inert gas at a level above the surface of the mercury, and arranged first to apply pressure by the inert gas on the mercury in the reservoir causing the mercury to flow through the capillary tube (8) of inverted U-shape and the mercury drop (14) to grow, and subsequently to lower the inert gas pressure to maintain the area of the mercury drop constant after attainment of the desired size.

2. The electrode according to claim 1, wherein said means comprises a system of electrovalves (A, B).

3. The electrode according to claims 1 and 2 wherein the increase and subsequent decrease of the invert gas pressure are performed under the control of an electronic timer or of a microprocessor.

4. The electrode according to claim 3 wherein said inert gas is nitrogen, compressed air or another inert gas which is applied by a cylinder to the reservoir, said means (13, A, B) being arranged to bring the inert gas pressure to a value between 3 and 12 atmospheres i.e. between about 3.039 and 12.156 bar; and to restore atmospheric pressure by establishing communication between the mercury reservoir (1), and the external environment.

5. The electrode according to claim 1, wherein the capillary tube (8) of inverted U-shape has a length between 35 and 40 cm, an inner diameter (17) between $0.35 \times 10^{-2}$ and $0.5 \times 10^{-2}$ cm and is held fast to the mercury reservoir (1) by a threaded nut (9) and O-rings (7).

6. The electrode according to claim 5, wherein the inner diameter at the end of the U-shaped capillary tube (8) which holds the hanging mercury drop (14), and hence the maximum diameter of said mercury drop, are made larger by soldering to said U-shaped capillary tube (8) of inner diameter (17) between $0.35 \times 10^{-2}$ and $0.5 \times 10^{-2}$ cm, a segment of a second capillary tube of larger inner diameter (16).

7. The electrode assembly defined in claim 6, wherein the electrical connection between said two capillary tubes is made by means of a platinum wire (18) which is directly soldered to the connection point (15) between said two capillary tubes of different inner diameter (16, 17), so as to notably reduce the electrical resistance of said electrode.

**Patentansprüche**

1. Quecksilbertropfelektrode, welche durch rasches Erzeugen statischer Quecksilbertropfen von reproduzierbarer Größe arbeitet und durch Halten dieser Tropfen für eine unbeschränkt lange Zeit an einem Ende eines Kapillarröhrchens (8) in Form eines umgekehrten U, wobei dieses Ende atmosphärischem Druck unterworfen ist und wobei das andere Ende des Kapillarröhrchens mit einem Quecksilberspeicher (1) verbunden ist, wobei bei dieser Elektrode die Höhe des Kapillarendes, welches den Quecksilbertropfen (14) hält, tiefer eingestellt ist als der obere Pegel des Quecksilbers (h') in dem Speicher, wobei die Differenz (h) zwischen den beiden Pegeln bzw. Ebenen ungefähr 1 bis 1,5 cm beträgt, so daß der auf den Tropfen wirkende Gegendruck un etwa ausgeglichen wird, wobei das Kapillarröhrchen (8) in Form eines umgekehrten U eine ausreichende Länge und einen ausreichend kleinen Innendurchmesser aufweist, derart, daß in Verbindung mit der genannten Höhendifferenz (h) viskose Kräfte das Quecksilber (3) daran hindern, durch das Kapillarröhrchen (8) in Form eines umgekehrten U hindurch zu strömen, wenn der Quecksilberspeicher (1) atmosphärischem Druck unterworfen ist, und wobei der Speicher mit Vorrichtungen (13, A, B) versehen ist, für den Einlaß und den Auslaß eines Inertgases auf einer Höhe über der Oberfläche des Quecksilbers und angeordnet, um zunächst Druck durch das Inertgas auf das Quecksilber in dem Speicher auszuüben, wodurch das Quecksilber dazu gebracht wird, durch das Kapillarröhrchen (8) in Form eines umgekehrten U zu strömen, und der Quecksilbertropfen (14) dazu gebracht wird, zu wachsen, und anschließend den Inertgas-Druck zu senken, um die Fläche des Quecksilbertropfens konstant zu halten, nach Erreichen der gewünschten Größe.

2. Elektrode nach Anspruch 1, bei welcher die genannten Vorrichtungen ein System von Elektroventilen (A, B) aufweisen.

3. Elektrode nach Anspruch 1 und 2, bei welcher die Zunahme und anschließende Abnahme des Inertgas-Druckes unter der Kontrolle eines elektronischen Zeitschalters oder eines Mikroprozessors durchgeführt werden.

4. Elektrode nach Anspruch 3, bei welcher das genannte Inertgas aus Stickstoff, Druckluft oder einem anderen Inertgas besteht, das durch einen Zylinder auf den Speicher aufgebracht wird, wobei die genannten Vorrichtungen (13, A, B) vorgesehen sind, um den Inertgas-Druck auf einen Wert zwischen 3 und 12 Atmosphären, d.h. zwischen ungefähr 3,039 und 12,156 bar, zu bringen, und um atmosphärischen Druck dadurch wiederherzustellen, daß eine Verbindung zwischen dem Quecksilberspeicher (1) und der äußeren Umgebung hergestellt wird.

5. Elektrode nach Anspruch 1, bei welcher das Kapillarröhrchen (8) in Form eines umgekehrten U eine Länge zwischen 35 und 40 cm aufweist, einen Innendurchmesser (17) zwischen $0,35\times10^{-2}$ und $0,5\times10^{-2}$ cm besitzt und an dem Quecksilberspeicher (1) durch eine Gewindemutter (9) und O-Ringe (7) festgehalten ist.

6. Elektrode nach Anspruch 5, bei welcher der Innendurchmesser an dem Ende des U-förmigen Kapillarröhrchens (8), das den hängenden Quecksilbertropfen (14) hält, und somit der maximale Durchmesser des genannten Quecksilbertropfens, dadurch größer gemacht sind, daß an das genannte U-förmige Kapillarröhrchen (8) mit einem Innendurchmesser (17) zwischen $0,35\times10^{-2}$ und $0,5\times10^{-2}$ cm ein Segment eines zweiten Kapillarröhrchens mit einem größeren Innendurchmesser (16) gelötet ist.

7. Elektrodenanordnung, wie in Anspruch 6 definiert, bei welcher die elektrische Verbindung zwischen den genannten zwei Kapillarröhrchen mittels eines Platindrahtes (18) hergestellt ist, der an dem Verbindungspunkt (15) zwischen den genannten zwei Kapillarröhrchen mit unterschiedlichem Innendurchmesser (16, 17) direkt gelötet ist, um so den elektrischen Widerstand der genannten Elektrode beträchtlich zu reduzieren.

**Revendications**

1. Une électrode à goutte de mercure fonctionnant par génération rapide de gouttes de mercure statiques de grosseur reproductible et par maintien de celles-ci pendant un temps indéfiniment long à l'une des extrémités, soumise à la pression atmosphérique, d'un tube capillaire (8) en forme d'U renversé dont l'autre extrémité est reliée à un réservoir de mercure (1), dans laquelle le niveau de l'extrémité du capillaire portant la goutte de mercure (14) est réglé plus bas que le niveau supérieur (h') du mercure dans le réservoir, la différence (h) entre les deux niveaux étant d'environ 1 à 1,5 cm, à l'effet d'équilibrer approximativement la contre-pression agissant sur la goutte; le tube capillaire en forme d'U renversé (8) est de longueur suffisamment grande et de diamètre intérieur suffisamment petit pour que, en conjugaison avec ladite différence de niveaux (h), les forces visqueuses empêchent le mercure (3) de s'écouler dans le tube capillaire en forme d'U renversé (8) lorsque le réservoir de mercure (1) est soumis à la pression atmosphérique; et le réservoir est pourvu d'un moyen (13, A, B) pour l'admission et l'échappement d'un gaz inerte à un niveau supérieur à celui de la surface du mercure, et agencé de manière à appliquer d'abord une pression par le gaz inerte sur le mercure contenu dans le réservoir en provoquant un écoulement du mercure par le tube capillaire (8) en forme d'U renversé et une croissance de la goutte de mercure (14), puis à abaisser la pression de gaz inerte pour maintenir constante l'aire de la goutte de mercure après obtention de la grosseur désirée.

2. L'électrode selon la revendication 1, dans laquelle ledit moyen comprend un système d'électrovannes (A, B).

3. L'électrode selon les revendications 1 et 2, dans laquelle l'augmentation et la diminution ultérieure de la pression de gaz inerte sont effectuées sous la commande d'une minuterie électronique ou d'un microprocesseur.

4. L'électrode selon la revendication 3, dans lequelle ledit gaz inerte est de l'azote, de l'air comprimé ou un autre gaz inerte qui est appliqué par une bouteille au réservoir, ledit moyen (13, A, B) étant adapté à amener la pression de gaz inerte à une valeur comprise entre 3 et 12 atmosphères (entre environ 3,039 et 12,156 bars) et à rétablir la pression atmosphérique en mettant en communication le réservoir de mercure (1) avec l'ambiance extérieure.

5. L'électrode selon la revendication 1, dans laquelle le tube capillaire (8) en forme d'U renversé présente une longueur comprise entre 35 et 40 cm, un diamètre intérieur (17) compris entre $0,35\times10^{-2}$ et $0,5\times10^{-2}$ cm et est solidarisé au réservoir de mercure (1) par un écrou fileté (9) et des joints toriques (7).

6. L'électrode selon la revendication 5, caractérisé en ce que le diamètre intérieur à l'extrémité du tube capillaire en forme d'U (8) qui porte la goutte de mercure suspendue (14), et donc le diamètre maximum de ladite goutte de mercure, sont rendus plus grands par soudage audit tube capillaire en forme d'U (8) de diamètre intérieur (17) compris entre $0,35\times10^{-2}$ et $0,5\times10^{-2}$ cm d'un tronçon d'un deuxième tube capillaire de diamètre intérieur (16) plus grand.

7. L'ensemble d'électrode selon la revendiccation 6, dans lequel la connexion électrique entre les deux tubes capillaires précités est établie au moyen d'un fil de platine (18) qui est directement soudé au point de reccordement (15) entre lesdits deux tubes capillaires de diamètres intérieurs différents (16, 17) afin de réduire notablement la résistance électrique de ladite électrode.

FIG. 1 a          FIG. 1

0 100 791

FIG.2